Europäisches Patentamt

European Patent Office

Office européen des brevets

(19)

(11) Veröffentlichungsnummer: **0 276 011**
**A1**

(12)

# EUROPÄISCHE PATENTANMELDUNG

(21) Anmeldenummer: **88100881.7**

(22) Anmeldetag: **21.01.88**

(51) Int. Cl.⁴: **A 23 L 1/275**
**A 23 G 9/02**

(30) Priorität: **23.01.87 DE 3701993**

(43) Veröffentlichungstag der Anmeldung:
**27.07.88 Patentblatt 88/30**

(84) Benannte Vertragsstaaten:
**AT BE CH DE ES FR GB GR IT LI LU NL SE**

(71) Anmelder: **Markt- und Kühlhallen AG**
**Grosse Elbstrasse 275**
**D-2000 Hamburg 50 (DE)**

(72) Erfinder: **Krauskopf, Heinz**
**Schenkendorfstrasse 6-8**
**D-3500 Kassel (DE)**

(74) Vertreter: **Schaefer, Gerhard, Dr.**
**Linde Aktiengesellschaft Zentrale Patentabteilung**
**D-8023 Höllriegelskreuth (DE)**

(54) **Verfahren zur Herstellung von mit natürlichen Farbstoffen gefärbten Lebensmitteln.**

(57) Die Erfindung betrifft ein Verfahren zur Herstellung von gefärbten Lebensmitteln, wobei der Farbstoff aus natürliche Pigmente enthaltenden wäßrigen Ausgangsstoffen gewonnen wird. Als Ausgangsstoffe werden insbesondere Früchte, vorteilhafterweise Holunderbeersaft, verwendet. Die wäßrigen Ausgangsstoffe werden auf einen Trockensubstanzgehalt von mindestens 70 Gew.% aufkonzentriert und dann den Lebensmitteln zugegeben. Vorteilhafterweise wird der konzentrierte Farbstoff bei der Infusion von Früchten dem Infusionsbad zugegeben.

EP 0 276 011 A1

0 276 011

**Beschreibung**

Verfahren zur Herstellung von mit natürlichen Farbstoffen gefärbten Lebensmitteln

Die Erfindung betrifft ein Verfahren zur Herstellung von gefärbten Lebensmitteln, wobei der Farbstoff aus natürliche Pigmente enthaltenden wäßrigen Ausgangsstoffen gewonnen wird.

Es ist bekannt, natürliche Farbstoffe, wie z.B. Saft von gepreßten Beeren, etwa Johannisbeeren oder Holunderbeeren, zum Färben von Lebensmitteln zu verwenden.

In der DE-OS 32 28 478 ist z.B. ein Verfahren zur Herstellung eines Speiseeises mit Fruchtgeschmack beschrieben, bei dem Fliederbeersaft und eine Fliederessenz aus Wasser, Zucker, Fliederblüten-Extrakt, Fruchtsäure und Zitronensaftpulver zur Erzielung eines bekömmlichen Fliedergeschmacks und einer pastellartigen fliederfarbenen Farbtönung verwendet werden.

Aus der EP O 115 599 ist es bekannt, Früchte mit einem natürliche Pigmente enthaltenden Farbstoff wie z.B. Erythrosin zu färben. Die Früchte werden dabei in einem wäßrigen Medium mit Farbstoff und Gerbsäure behandelt.

Die bekannten Verfahren zum Herstellen von natürlichen Farbstoffen zum Färben von Lebensmitteln besitzen alle den Nachteil, daß große Mengen an Farbstoff benötigt werden, um eine ausreichende und beständige Färbung der Lebensmittel zu erreichen. Außerdem erfordern auf herkömmliche Weise hergestellte natürliche Farbstoffe die Zugabe von Zusatzstoffen, wie z.B. Gerbsäure, beim Färben der Lebensmittel, um z.B. ein Wiederausbleichen der Lebensmittel nach kurzer Zeit zu verhindern.

Aufgabe der Erfindung ist es daher, ein Verfahren zur Herstellung von mit natürlichem Farbstoff gefärbten Lebensmitteln so auszugestalten, daß bereits geringe Mengen an Farbstoff genügen, um eine intensive und dauerhafte Färbung der Lebensmittel zu erzielen, und daß auf Zusatzstoffe verzichtet werden kann.

Diese Aufgabe wird erfindungsgemäß dadurch gelöst, daß die wäßrigen Ausgangsstoffe auf einen Trockensubstanzgehalt von mindestens 70 Gew.% aufkonzentriert werden und dann der so gewonnene konzentrierte Farbstoff den Lebensmitteln zugegeben wird.

Holunderbeeren, Johannisbeeren, Vogelbeeren, Sanddorn oder andere natürliche Pigmente enthaltende Früchte werden mit oder ohne Stiele gepreßt und im Preßsaft enthaltene Trübstoffe gegebenenfalls z.B. mittels Zentrifugation entfernt. Dieser natürliche Pigmente enthaltende Preßsaft bildet den wäßrigen Ausgangsstoff des erfindungsgemäßen Verfahrens. Auch ein Vermischen geeigneter Preßsäfte ist möglich. Erfindungsgemäß werden die wäßrigen Ausgangsstoffe auf einen Gehalt an wasserlöslichen Feststoffen von mindestens 70 Gew.% aufkonzentriert. Während der Preßsaft üblicherweise etwa 90 bis 95 Gew.% Wasser enthält, so daß bei seiner Verwendung als Farbstoff große Mengen benötigt werden, genügen bei Verwendung des erfindungsgemäß hergestellten Konzentrats geringe Mengen zur Erzielung einer dauerhaften Färbung. Überraschenderweise hat sich gezeigt, daß bei Anwendung der erfindungsgemäß herge stellten Farbstoffs auf Zusatzstoffe bei der Färbung der Lebensmittel verzichtet werden kann. Es findet auch nach längerer Lagerungszeit kein Ausbleichen der Lebensmittel statt.

Eine besonders vorteilhafte Ausgestaltung des erfindungsgemäßen Verfahrens besteht darin, die wäßrigen Ausgangsstoffe durch Einbringen in ein Entgasungsgefäß mit einem Vakuum von weniger als 0,2 bar, vorzugsweise weniger als 0,16 bar, bei einer Temperatur von 40 bis 80°C aufzukonzentrieren dienen. HIerzu kann eine herkömmliche Vakuumkonzentrieranlage dienen. Das erhaltene Konzentrat kann im Kreislauf durch die Konzentrieranlage gefahren werden, bis ein Trockensubstanzgehalt des konzentrierten Farbstoffs von über 70 Gew.% erzielt worden ist.

Es hat sich als günstig erwiesen, die wäßrigen Ausgangsstoffe vor dem Konzentrieren auf eine Temperatur von ca. 50 bis 60°C vorzuwärmen. In der Vakuumkonzentrieranlage steigt dann die Temperatur der Ausganssstoffe auf ca. 70 bis 80°C. Nach Entnahme des erhaltenen konzentrierten Farbstoffs weist dieser eine Temperatur von ca. 48 bis 58°C auf.

Es hat sich herausgestellt, daß sich besonders Holunderbeersaft als Ausgangsstoff eignet. Wohl wegen seines hohen Anthocyangehaltes ergibt erfindungsgemäß aufkonzentrierter Holunderbeersaft einen sehr kräftigen Farbstoff, der sich vor allem zum Färben von roten Früchten, wie Erdbeeren, Kirschen usw., hervorragend eignet. Dabei wurde überraschenderweise festgestellt, daß die mit erfindungsgemäß aufkonzentriertem Holunderbeersaft gefärbten Früchte praktisch keine Geschmacksveränderung erleiden.

Als besonders vorteilhaft hat sich die Verwendung des erfindungsgemäß hergestellten Farbstoffs zum Färben von infundierten Früchten erwiesen. Frische oder vorher gefrorene Früchte werden in ein Bad mit einer wäßrigen, 35 bis 100 Gew.%, bezogen auf den Gesamtzuckergehalt Fructose enthaltenden Zuckerlösung eingebracht. Die Zuckerlösung besitzt einen Gehalt an wasserlöslichen Feststoffen von 55 bis 75 Gew.%. Es wird eine Badtemperatur von 35 bis 45°C aufrechterhalten. Zum Bad wird der erfindungsgemäße Farbstoff in einer Menge zugegeben, die 0,1 bis 2,5 Gew.% bezogen auf die Zuckerlösung im Bad entspricht. Die Früchte werden so lange im Bad behandelt, bis ihr Gehalt an wasserlöslichen Feststoffen 35 bis 45 Gew.% beträgt. Die so erhaltenen Früchte können nach Entnahme aus dem Bad, z.B. mittels einer $CO_2$-Gefrieranlage, eingefroren und gelagert werden. Auf diese Weise werden dauerhaft gefärbte, lagerungsfähige und kaum geschrumpfte Früchte erhalten, die sich bei üblichen Gefrierschranktemperaturen von etwa -20 bis -10°C durch eine weiche und eßfähige Konsistenz auszeichnen. Dagegen weisen auf herkömmliche Weise infundierte Früchte meist ein blaßes, ausgebleichtes und wenig appetitliches Erscheinungsbild auf.

Bevorzugterweise werden rote Früchte, wie Erdbeeren, Kirschen usw., indem die Zuckerlösung

2

enthaltenden Bad infundiert und durch Zugabe von erfingungsgemäß aufkonzentriertem Holunderbeersaft gefärbt.

Zur Färbung von Sauerkirschen etwa wird konzentrierter Holunderbeersaft in einer Menge dem Bad zugegeben, die ca. 0,2 bis 0,3 Gew.% bezogen auf die Zuckerlösung im Bad entspricht. Zur Färbung von Erdbeeren hat sich die Zugabe von konzentriertem Holunderbeersaft zum Bad in einer Menge von etwa 1 Gew.%, bezogen auf die Zuckerlösung im Bad, als besondes günstig erwiesen.

Die so hergestellten infundierten und gefärbten Früchte eignen sich besonders zur Herstellung von Fruchtjoghurt, Speiseeis, Torten und anderen hochwertigen Lebensmitteln. Aber auch eine unmittelbare Färbung von Joghurt, Speiseeis usw. mit dem erfindungsgemäß hergestellten Farbstoff ist möglich.

Das erfindungsgemäß Verfahren sei durch folgende Ausführungsbeispiele näher erläutert:

1. Als Ausgangsstoff dient klarer bzw. geschönter Holunderbeersaft.

Holunderbeeren werden mit oder ohne Stiele gepreßt und im Preßsaft enthaltene Trübstoffe z.B. mittels Zentrifugation oder Fällung entfernt. Dieser als geschönt bezeichnete Preßsaft bildet den wäßrigen natürliche Pigmente enthaltenden Ausgangsstoff des erfindungsgemäßen Verfahrens, der im folgenden einfach als Holundersaft bezeichnet wird. Der Holundersaft wird in einem Volumenstrom von 1300 l/h über einen Vorlaufbehälter der Vakuumkonzentrieranlage zugeführt. In einem Vorwärmer wird der Holundersaft zunächst auf eine Temperatur von 56,2°C vorgewärmt. Anschließend wird der Holundersaft dem Entgasungsgefäß zugeführt, in dem ein Vakuum von 0,16 bar aufrechterhalten wird. Der Holundersaft erreicht während des Konzentriervorgangs eine Temperatur von 72,5°C.

Die folgende Tabelle zeigt den zeitlichen Verlauf des Trockensubstanzgehaltes des Holundersaftes während des Konzentriervorgangs:

### Tabelle 1

| Zeit (min) | Trockensubstanzgehalt (Gew.%) | Bemerkung |
|---|---|---|
| 0 | 10,2 | Beginn des Konzentriervorgangs |
| 30 | 13,6 | |
| 60 | 15,1 | |
| 90 | 20,1 | |
| 120 | 27,9 | Restlicher Holundersaft wird demVorlaufbehälter zugeführt. |
| 150 | 22,4 | |
| 180 | 33,7 | |
| 190 | 43,4 | |
| 200 | 54,5 | |
| 204 | 59,9 | |
| 206 | 64,4 | |
| 208 | 69,3 | |
| 211 | 74,8 | |

Nach 211 Minuten wird schließlich ein Holundersaftkonzentrat mit einer Temperatur von 54,2°C und einem Trockensubstanzgehalt von 74,8 Gew.% erhalten, das sich ausgezeichnet als natürlicher Farbstoff für Lebensmittel eignet. Besonders rote Früchte, wie Erdbeeren oder Sauerkirschen, können mit dem Holundersaftkonzentrat vorzüglich behandelt werden.

In dem vorliegenden Ausführungsbeispiel werden mit dem Holundersaftkonzentrat gefärbte, infundierte Sauerkirschen hergestellt. Dazu werden Sauerkirschen in gefrorenem Zustand in ein eine Zuckerlösung enthaltendes Bad eingebracht. Die Zuckerlösung besteht aus Maissirup mit 45 Gew.% Fructose und besitzt eine Temperatur von 40°C. Der Zuckerlöung wird das auf die oben beschriebene Weise hergestellte Holundersaftkon- zentrat in einer Menge zugegeben, die 0,26 Gew.% bezogen auf die Zuckerlösung im Bad entspricht. Mittels einer Förderschnecke werden die Kirschen durch das Bad befördert. Die im Bad befindliche Zuckerlösung weist zu Beginn der Förderstrecke einen Gehalt von wasserlöslichen Feststoffen von 71 Gew.% und am Ende einen Gehalt von 60 Gew.% auf. Die Kirschen werden 4 Stunden lang in dem Bad behandelt und weisen nach Entnahme aus dem Bad einen Gehalt an wasserlöslichen Feststoffen von 39 Gew.% auf. Anschließend werden die behandelten Kirschen in einer $CO_2$-Gefrieranlage eingefroren.

Die so erhaltenene Kirschen können bei üblichen Gefrierschranktempraturen von etwa -20 bis -10°C gelagert werden und behalten ihre rote Färbung und weiche, eßfähige Konsistenz.

2. Als Ausgangsstoff dient trüber Holunderbeersaft

Holunderbeeren werden mit oder ohne Stiele gepreßt und die im Preßsaft enthaltenden Trübstoffe nicht entfernt. Dieser Preßsaft bildet den wäßrigen natürlich Pigmente enthaltenden Ausgangsstoff des erfindungsgemäßen Verfahrens. Der Holundersaft wird in einem Volumenstrom von 1300 l/h über einen Vorlaufbehälter der Vakuumkonzentrieranlage zugeführt. In einem Vorwärmer wird der Holundersaft zunächst auf eine Temperatur von 55,3°C erwärmt. Anschließend wird der Holundersaft dem Entgasungsgefäß zugeführt, in dem ein Vakuum von 0,16 bar aufrechterhalten wird. Der Holundersaft erreicht während des Konzentriervorgangs eine Temperatur von 72°C.

Die folgende Tabelle zeigt den zeitlichen Verlauf des Trockensubstanzgehaltes des Holundersaftes während des Konzentriervorgangs:

Tabelle 2

| Zeit (min) | Trockensubstanzgehalt (Gew.%) | Bemerkung |
|---|---|---|
| 0 | 10,06 | Beginn des Konzentriervorgangs |
| 30 | 15,52 | |
| 60 | 17,52 | |
| 90 | 28,13 | |
| 120 | 40,92 | Restlicher Holundersaft wird dem Vorlaufbehälter zugeführt. |
| 150 | 33,43 | |
| 180 | 65,65 | |
| 185 | 73,61 | |
| 190 | 76,09 | |

Nach 190 Minuten wird schließlich ein Holundersaftkonzentrat mit einer Temperatur von 53,7°C und einem Trockensubstanzgehalt von 76,09 Gew.% erhalten, das sich besonders zum Färben von roten Früchten, wie Erdbeeren oder Sauerkirschen, eignet.

In dem vorliegenden Ausführungsbeispiel werden mit dem Holundersaftkonzentrat, gefärbte, infundierte Erdbeeren hergestellt. Dazu werden die Erdbeeren in gefrorenem Zustand in ein eine Zuckerlösung enthaltendes Bad eingebracht Temperatur und Zusammensetzung des Bades entsprechen dem ersten Ausführungsbeispiel. Der Zuckerlösung wird das auf die oben beschriebene Weise hergestellte Holundersaftkonzentrat in einer Menge zugegeben, die 1 Gew.% bezogen auf die Zuckerlösung im Bad entspricht. Die Erdbeeren werden 4 Stunden in dem Bad behandelt und wiesen nach Entnahme aus dem Bad einen Gehalt an wasserlöslichen Feststoffen von 40 Gew.% auf. Anschließend werden die behandelten Erdbeeren in einer $CO_2$-Gefrieranlage eingefroren.

Die erhaltenen infundierten Erdbeeren haben bei der Behandlung praktisch keine Geschmacksveränderung erfahren und behalten ihre rote Färbung auch bei längerer Lagerungszeit bei üblichen Gefrierschranktemperaturen.

## Patentansprüche

1. Verfahren zur Herstellung von gefärbten Lebensmitteln, wobei der Farbstoff aus natürliche Pigmente enthaltenden wäßrigen Ausgangsstoffen gewonnen wird, dadurch gekennzeichnet, daß die wäßrigen Ausgangsstoffe auf einen Trockensubstanzgehalt von mindestens 70 Gew.% aufkonzentriert werden und dann der so gewonnene konzentrierte Farbstoff den Lebensmitteln zugegeben wird.

2. Verfahren nach Anspruch 1, dadurch gekennzeichnet, daß die wäßrigen Ausgangsstoffe durch Einbringen in ein Entgasungsgefäß mit einem Vakuum von weniger als 0,2 bar bei einer Temperatur von 40 bis 80°C aufkonzentriert werden.

3. Verfahren nach einem der Ansprüche 1 und 2, dadurch gekennzeichnet, daß als wäßriger Ausgangsstoff Holunderbeersaft verwendet wird.

4. Verfahren nach einem der Ansprüche 1 bis 3, dadurch gekennzeichnet, daß als Lebensmittel Früchte, insbesondere rote Früchte wie Erdbeeren, Kirschen usw., verwendet werden.

5. Verfahren nach Anspruch 4, dadurch gekennzeichnet, daß die Früchte in ein eine wäßrige Zuckerlösung enthaltendes Bad eingebracht werden und der konzentrierte Farbstoff dem Bad in einer Menge zugegeben wird, die 0,1 bis 2,5 Gew.% bezogen auf die Zuckerlösung entspricht.

6. Verfahren nach Anspruch 5, dadurch gekennzeichnet, daß die Zuckerlösung 35 bis 100 Gew.%, bezogen auf den Gesamtzuckergehalt, Fructose enthält und einen Gehalt an wasserlöslichen Feststoffen von 55 bis 75 Gew.% aufweist.

Verfahren nach Anspruch 5 oder 6, dadurch gekennzeichnet, daß eine Badtemperatur von 35 bis 45°C aufrechterhalten wird.

Verfahren nach einem der Ansprüche 5 bis 7, dadurch gekennzeichnet, daß die Früchte so lange im Bad behandelt werden, bis sie einen Gehalt an wasserlöslichen Feststoffen von 35 bis 45 Gew.% aufweisen.